# EUROPEAN PATENT APPLICATION

(11) **EP 4 339 977 A1**
(43) Date of publication of application: **20.03.2024**
(21) Application number: 23197875.0
(22) Date of filing: 18.09.2023
(51) Int. Cl.: H01F 41/02, H01F 1/057

(54) **SINTERED NEODYMIUM-IRON-BORON PERMANENT MAGNET, PREPARATION METHOD AND USE THEREOF**

(30) Priority: 19.09.2022 CN 202211138844
(71) Applicant: Nantong Zhenghai Magnet Co., Ltd., 226500 Jiangsu (CN); Yantai Zhenghai Magnetic Material Co., Ltd., Yantai Shandong 264006 (CN)
(72) Inventor: Xu, Zhaopu, Jiangsu, 226500 (CN); Hu, Xinde, Jiangsu, 226500 (CN); Li, Wei, Jiangsu, 226500 (CN); Xiang, Junjia, Jiangsu, 226500 (CN); Zhang, Yumeng, Jiangsu, 226500 (CN)
(74) Representative: Gille Hrabal Partnerschaftsgesellschaft mbB Patentanwälte

(57) **Abstract**

The present disclosure provides a sintered neodymium-iron-boron permanent magnet, a preparation method and use thereof. The permanent magnet described herein comprises a grain and a grain boundary phase. The grain boundary phase is located on an epitaxial layer of the grain. The grain boundary phase comprises at least an RH. The grain comprises at least Nd₂Fe₁₄B. In the grain boundary phase within a depth of 100µm from the surface to the center of the sintered neodymium-iron-boron permanent magnet, the area of the grain boundary phase with an RH content of more than 6 wt% accounts for 50% or more of the total area of the grain boundary phase. The present disclosure adopts an RH and an RL as the diffusion source for composite diffusion, significantly improving the coercivity of the permanent magnet and the utilization rate of the RH in the diffusion source.

## Description

The present application claims priority to the Patent Application No. 202211138844.3, entitled "SINTERED NEODYMIUM-IRON-BORON PERMANENT MAGNET, PREPARATION METHOD AND USE THEREOF", filed with the China National Intellectual Property Administration on September 19, 2022, which is incorporated herein by reference in its entirety.

### TECHNICAL FIELD

The present disclosure relates to the technical field of rare earth permanent magnet material manufacture, and particularly, to a sintered neodymium-iron-boron permanent magnet manufactured through grain boundary diffusion, a preparation method and use thereof.

### BACKGROUND

The sintered neodymium-iron-boron magnet is widely applied to the new energy industry due to its excellent magnetic performance, and is a key basic functional material for realizing the ambitious goal of carbon neutralization. The industries represented by wind power and electric automobiles put forward higher requirements on the sintered neodymium-iron-boron material, which request not only high magnetic performance but also high temperature resistance. To meet the requirement that the magnetic performance is not weakened at high temperatures, the coercivity of the magnet needs to be enhanced. Among the existing methods for enhancing the coercivity of a magnet, the dual alloy method and the heavy rare earth grain boundary diffusion technology are the most effective and reproducible methods. The dual alloy method improves the grain boundary microstructure of the magnet by mixing two alloys with different compositions to effectively improve the coercivity of the magnet.

By regulating and controlling the distribution of the heavy rare earth, the heavy rare earth grain boundary diffusion technology promotes the proper permeation of the heavy rare earth in the magnet, and achieves the maximum improvement of coercivity as per unit mass of heavy rare earth. Therefore, some studies combined the dual alloy method with the grain boundary diffusion technology to manufacture magnets with high coercivity, but the properties of the resultant magnets do not meet the expectations. This may be mainly attributed to the determinant role of the grain boundary phase composition and the grain boundary structure of substrate magnet for diffusion in the heavy rare earth permeation and the flow and dispersion of the heavy rare earth in the magnet in the grain boundary diffusion technology.

In the neodymium-iron-boron magnet manufactured by the dual alloy method, there is a significant concentration difference in component elements due to the difference in the composition between the main and auxiliary phases, which seriously affects the permeation of heavy rare earth elements into the magnet, and finally leads to the lack of significant increase in the coercivity of the magnet and low utilization rate of the heavy rare earth.

### SUMMARY

To solve the technical problems described above, the present disclosure provides the following technical schemes:
The present disclosure provides a sintered neodymium-iron-boron permanent magnet, comprising a grain and a grain boundary phase, wherein the grain boundary phase is located on an epitaxial layer of the grain, and the grain boundary phase comprises at least an RH;
the grain comprises at least Nd₂Fe₁₄B;
in the grain boundary phase within a depth of 100µm from the surface to the center of the sintered neodymium-iron-boron permanent magnet, the area of the grain boundary phase with an RH content of more than 6 wt% accounts for 50% or more, preferably 70% or more, e.g., 70%, 80% or 90%, of the total area of the grain boundary phase.

According to an embodiment of the present disclosure, in the grain boundary phase within a depth of 100µm from the surface to the center of the sintered neodymium-iron-boron permanent magnet, the area of the grain boundary phase with an RH content of more than 13 wt% accounts for 1% or more, preferably 10% or more, e.g., 10%, 11%, 12%, 13%, 14%, 15%, 16%, 17%, 18% or 20%, of the total area of the grain boundary phase.

According to an embodiment of the present disclosure, the grain boundary phase of the permanent magnet is smoother, and the structure in the grain boundary phase is more uniform.

According to an embodiment of the present disclosure, the grain boundary phase comprises an RH and/or an RL.

Preferably, the RL represents a light rare earth element selected from at least one of Pr, Nd, La, and Ce.

Preferably, the RH represents a heavy rare earth element selected from at least one of Dy, Tb, and Ho.

According to an embodiment of the present disclosure, the sintered neodymium-iron-boron permanent magnet is obtained by milling, compressing and sintering a raw material of the sintered neodymium-iron-boron permanent magnet to obtain a blank, arranging a diffusion source on the surface of the blank, and conducting diffusion treatment.

According to an embodiment of the present disclosure, the raw material of the sintered neodymium-iron-boron permanent magnet comprises a master alloy and/or an auxiliary alloy, preferably the master alloy and the auxiliary alloy.

According to an embodiment of the present disclosure, the master alloy comprises at least R₁, Fe, B, and M₁, wherein
R₁ is selected from at least one of Pr, Nd, Ce, La, Dy, and Tb, and the content of R₁ is not less than 29 wt% and not more than 32.2 wt%, e.g., 29 wt%, 30 wt%, 31 wt%, or 32 wt%;
the content of B is more than 0.8 wt% and not more than 0.94 wt%, e.g., 0.81 wt%, 0.85 wt%, 0.88 wt%, 0.9 wt%, or 0.93 wt%;
M₁ is selected from Ga and Cu, and optionally comprises or does not comprise at least one of Al, Zr, Ti, and Co, the content of M being more than 0 and not more than 2.5 wt% (e.g., 1 wt%, 1.5 wt%, 2 wt%, or 2.5 wt%), Ga accounting for 0-0.5 wt% (e.g., 0 wt%, 0.1 wt%, 0.2 wt%, 0.3 wt%, 0.4 wt%, or 0.5 wt%) of the total amount of M, Cu accounting for 0-0.4 wt% (e.g., 0 wt%, 0.1 wt%, 0.2 wt%, 0.3 wt%, or 0.4 wt%) of the total amount of M.

According to an embodiment of the present disclosure, the auxiliary alloy comprises at least R₂, Fe, B, and M₂, wherein
R₂ is selected from at least one of Pr, Nd, Dy, and Tb, and the content of R₂ is not less than 30 wt% and not more than 33.3 wt%, e.g., 30 wt%, 31 wt%, 32 wt%, or 33 wt%; the content of B is more than 0.94 wt% and not more than 1.1 wt%, e.g., 0.95 wt%, 0.96 wt%, 0.97 wt%, 0.98 wt%, 0.99 wt%, 1 wt%, or 1.1 wt%;
M₂ is selected from Ga and Cu, and optionally comprises or does not comprise at least one of Al, Zr, Ti, and Co, the content of M being more than 0 and not more than 3 wt% (e.g., 1 wt%, 1.5 wt%, 2 wt%, 2.5 wt%, or 3 wt%), Ga accounting for 0-0.5 wt% (e.g., 0 wt%, 0.1 wt%, 0.2 wt%, 0.3 wt%, 0.4 wt%, or 0.5 wt%) of the total amount of M, Cu accounting for 0-0.4 wt% (e.g., 0 wt%, 0.1 wt%, 0.2 wt%, 0.3 wt%, or 0.4 wt%) of the total amount of M.

According to a preferred embodiment of the present disclosure, the content of B in the master alloy is less than the content of B in the auxiliary alloy.

According to an embodiment of the present disclosure, the sintering comprises sintering by a multi-stage heating with variable-rate thermal ramping in vacuum.

Preferably, the sintering by multi-stage heating with variable-rate thermal ramping can ensure the removal of impurities such as hydrogen, nitrogen, antioxidants and other additives in the blank, which is beneficial to conducting diffusion treatment.

Preferably, the multi-stage heating with variable-rate thermal ramping comprises: heating to 300-400 °C at a ramping rate of 1-3 °C/min, heating to 700-800 °C at a ramping rate of 4-6 °C/min, holding at 700-800 °C for a period of time, and heating to 1000-1100 °C at a ramping rate of 7-10 °C/min. Furthermore, the holding time is 30-90 min.

According to an embodiment of the present disclosure, the diffusion source comprises the RH and the RL that are defined as above.

Preferably, in the diffusion source, the mass ratio of the RL to the RH is more than 0 and not more than 0.5, e.g., 0.1, 0.2, 0.3, 0.4, and 0.5.

The present disclosure also provides a preparation method of the sintered neodymium-iron-boron permanent magnet described above, comprising:
(1) a milling process: mixing and crushing a raw material of the sintered neodymium-iron-boron permanent magnet to obtain a magnetic powder;
(2) a compressing process: compressing and forming the magnetic powder under the action of a magnetic field to obtain a green body;
(3) a sintering process: sintering the green body to obtain a blank; and
(4) a diffusion treatment: dispersing a diffusion material on the surface of the blank obtained in step (3), and conducting a permeation treatment to obtain the sintered neodymium-iron-boron permanent magnet.

According to an embodiment of the present disclosure, in step (1), the raw material of the sintered neodymium-iron-boron permanent magnet comprises a master alloy and/or an auxiliary alloy, preferably the master alloy and the auxiliary alloy. Preferably, the raw material of the sintered neodymium-iron-boron permanent magnet comprises the master alloy and the auxiliary alloy, and the mass ratio of the master alloy to the auxiliary alloy is (1-5): 1, e.g., 2.7:1.

According to an embodiment of the present disclosure, the master alloy and the auxiliary alloy are defined as above.

According to an embodiment of the present disclosure, the master alloy and the auxiliary alloy can be prepared into flakes of the master alloy and flakes of the auxiliary alloy by methods known in the art, e.g., rapid hardening flakes of the master alloy and rapid hardening flakes of the auxiliary alloy separately prepared by a rapid hardening and strip casting process. Illustratively, the raw materials of the master alloy and the auxiliary alloy may be prepared separately, then raw materials described above are melted in an inert atmosphere such as vacuum or argon atmosphere, casted on the surface of a rotating quenching roller, and then dropped into a quenching disc for further cooling, to obtain the rapid hardening flakes of the master alloy and the rapid hardening flakes of the auxiliary alloy described above.

According to an embodiment of the present disclosure, in step (1), the magnetic powder has a granularity of 1 to 10 µm.

According to an embodiment of the present disclosure, in step (1), the crushing comprises a coarse crushing and a fine crushing.

Preferably, the coarse crushing is, e.g., selected from hydrogen decrepitation.

Preferably, the fine crushing is selected from jet milling. Further, the jet milling is conducted in an inert gas atmosphere. Further, the inert gas is selected from nitrogen, helium, and the like. In the present disclosure, the hydrogen decrepitation, medium grinding, or the jet milling can be conducted by adopting methods known in the art. Illustratively, the flakes of the master alloy and the flakes of the auxiliary alloy were crushed by hydrogen decrepitation; mixed materials were stirred for 1-4 h, and then crushed by jet milling; and the mixed materials were further stirred for 1-4 h to obtain a mixed magnetic powder.

According to an embodiment of the present disclosure, in step (2), the magnetic field may be selected from a magnetic field known in the art, e.g., a magnetic field with an intensity of 2 T.

According to an embodiment of the present disclosure, in step (2), the compressing and forming can be conducted by using a device known in the art, e.g., in a cavity of a press grinder tool.

According to an embodiment of the present disclosure, in step (2), after the compressing and forming, the density of the blank can be further improved by cold isostatic compressing.

According to an embodiment of the present disclosure, in step (3), the sintering comprises: sintering by a multi-stage heating with variable-rate thermal ramping to 1000-1100 °C in vacuum to obtain the blank.

Preferably, during the sintering, the vacuum degree is 10⁻¹ Pa or less.

Preferably, during the sintering, the time for the sintering is 1-10 h, e.g., 5 h.

Preferably, the multi-stage heating with variable-rate thermal ramping comprises: heating to 300-400 °C at a ramping rate of 1-3 °C/min, heating to 700-800 °C at a ramping rate of 4-6 °C/min, holding at 700-800 °C for a period of time, and heating to 1000-1100 °C at a ramping rate of 7-10 °C/min. Furthermore, the holding time is 30-90 min.

Illustratively, the multi-stage heating with variable-rate thermal ramping comprises: heating to 300-400 °C at a ramping rate of 3 °C/min, heating to 670 °C at a ramping rate of 5 °C/min, holding at 670 °C for 70 min, and heating to 1040 °C at a ramping rate of 8 °C/min.

According to an embodiment of the present disclosure, an aging treatment may be further conducted after the sintering.

Preferably, the aging treatment comprises: heating to 800-950 °C as a primary aging treatment, and holding for 2-5 h; and then heating to 450-600 °C as a secondary aging treatment, and holding for 2 to 4 h.

Illustratively, the aging treatment comprises: conducting the primary aging treatment at 900 °C for 4 h, and conducting the secondary aging treatment at 530 °C for 3 h. According to an embodiment of the present disclosure, after the sintering process and before the diffusion treatment, the blank may be further processed into a target size and then subjected to acid cleaning.

Illustratively, the target size may be selected and used as desired, e.g., a thickness of less than 10 mm.

Preferably, the acid cleaning refers to cleaning with an acidic solution, e.g., ultrasonic cleaning in a nitric acid solution with a volume concentration of 2-6% for 5-20 min, and drying in a tunnel oven at 60-90 °C.

According to an embodiment of the present disclosure, in step (4), the diffusion material comprises a powder of the RH and a powder of the RL, and the RH and the RL are defined as above.

Preferably, the powder of the RH is selected from at least one of an elemental metal of the RH, an alloy of the RH, and an oxide, a fluoride, a hydride and an oxyfluoride of the RH.

Preferably, the powder of the RL is selected from at least one of an elemental metal of the RL, an alloy of the RL, and an oxide, a fluoride, a hydride and an oxyfluoride of the RL.

According to an embodiment of the present disclosure, the mass ratio of the powder of the RL to the powder of the RH is more than 0 and not more than 0.5, e.g., 0.1, 0.2, 0.3, 0.4, 0.5, such as 0.375.

According to an embodiment of the present disclosure, the diffusion material may be arranged on the surface of the blank by using methods known in the art, which is not specified in the present invention.

According to an exemplary embodiment of the present disclosure, a slurry containing the diffusion material is uniformly applied to the surface of the blank.

Preferably, a preparation method of the slurry containing the diffusion material comprises: optionally mixing the diffusion material with an antioxidant and a diluent, and uniformly stirring for 1-4 h to obtain the slurry. Preferably, the antioxidant is, e.g., selected from at least one of toluene, 4-hexylresorcinol, and butylated hydroxytoluene. Preferably, the diluent is, e.g., selected from at least one of ethanol, benzyl alcohol, and acetone. Preferably, the slurry applied to the surface of the blank accounts for 0.2-1.5% of the sintered neodymium-iron-boron permanent magnet by weight, and is dried by letting stand at 50-70 °C for 5-10 min.

According to an embodiment of the present disclosure, in step (4), the permeation treatment comprises: heating to 830-910 °C in vacuum for permeation for 6-12 h.

According to an embodiment of the present disclosure, a vacuum aging treatment is also conducted after the permeation treatment.

Preferably, the vacuum aging treatment comprises: conducting the vacuum aging treatment at 440-560 °C to obtain the sintered neodymium-iron-boron permanent magnet. Preferably, the vacuum degree can be selected from vacuum degrees known in the art, e.g., 10⁻¹ Pa or less.

According to an embodiment of the present disclosure, the sintered neodymium-iron-boron permanent magnet is prepared by the preparation method described above and is defined as above.

The present disclosure further provides use of the sintered neodymium-iron-boron permanent magnet described above, e.g., in a motor.

### Beneficial Effects

In the present disclosure, the RH and the RL are adopted as the diffusion source to conduct the composite diffusion. By adding the RL into the diffusion source, the concentration difference of the RH between the grain and the grain boundary phase can be balanced during diffusion and the components of the grain boundary phase are effectively homogenized, thus improving the wettability of the grain boundary phase and making the structure of the grain boundary phase smoother; meanwhile, the RH in the diffusion source can smoothly and deeply permeate into the sintered neodymium-iron-boron permanent magnet, such that the RH is distributed more uniformly in the sintered neodymium-iron-boron permanent magnet, thereby significantly improving the coercivity of the permanent magnet and the utilization rate of the RH in the diffusion source.

The present disclosure ensures the removal of hydrogen, nitrogen, antioxidant, and other additives in the blank by using a special sintering treatment, particularly controlling the multi-stage heating with variable-rate thermal ramping, and is thus more beneficial to the composite diffusion treatment.

### BRIEF DESCRIPTION OF THE DRAWINGS

FIG. 1 is an EPMA image of a sintered neodymium-iron-boron permanent magnet prepared in Example 1 of the present disclosure;
FIG. 2 is an EPMA image of a sintered neodymium-iron-boron permanent magnet prepared in Comparative Example 1-1 of the present disclosure.

### DETAILED DESCRIPTION

The technical solutions of the present disclosure will be further illustrated in detail with reference to the following specific examples. It will be appreciated that the following examples are merely exemplary illustrations and explanations of the present disclosure, and should not be construed as limiting the protection scope of the present disclosure. All techniques implemented based on the content of the present disclosure described above are included within the protection scope of the present disclosure.

Unless otherwise stated, the raw materials and reagents used in the following examples are all commercially available products or can be prepared using known methods.

### Example 1

The preparation method of the sintered neodymium-iron-boron permanent magnet is as follows:
I. Preparation of a blank:
   (1) Raw materials were formulated according to the following ratios: the master alloy was prepared according to a high-Br formula, comprising 31 wt% of Nd, 0.91 wt% of B, 0.3 wt% of Ti, 0.2 wt% of Ga, 0.2 wt% of Cu, 0.3 wt% of Al, 1.0 wt% of Co, the remaining of Fe, and inevitable impurities. The formulated raw materials were heated to 1400 °C in vacuum for melting and held for 15 min, cast on the surface of a rotating quenching roller after the homogenization of the raw materials was ensured, and then dropped into a quenching disc for further cooling to obtain master alloy flakes;
      auxiliary alloy flakes were prepared by using the same method according to a high Hcj formula, comprising 32.5 wt% of Nd, 0.98 wt% of B, 0.4 wt% of Ti, 0.3 wt% of Ga, 0.3 wt% of Cu, 0.3 wt% of Al, 1.5 wt% of Co, the remaining of Fe, and inevitable impurities;
   (2) The master alloy rapid hardening flakes and the auxiliary alloy rapid hardening flakes in step (1) were mixed according to a mass ratio of 2.7:1, and the mixture was subjected to jet milling after hydrogen decrepitation coarse crushing with a ball mill to obtain a mixed magnetic powder with a granularity of 1 to 10 µm and an average particle size of 2.75 µm;
   (3) An antioxidant fatty acid ester of 0.07 wt% was added into the mixed magnetic powder obtained in step (2), and the mixture was continuously and mechanically stirred for 4 h until the mixture was uniformly dispersed;
   (4) The magnetic powder of step (3) was compressed and formed in vacuum in a magnetic field with an intensity of 2 T in the direction of the magnetic field, and a green body was obtained after cold isostatic compressing;
   (5) Sintering treatment: The green body of step (4) was placed in a vacuum sintering furnace, heated to 300-400 °C at a ramping rate of 3 °C/min, heated to 670 °C at a ramping rate of 5 °C/min, held at 670 °C for 70 min, heated to 1040 °C at a ramping rate of 8 °C/min, and sintered for 5 h;
   (6) Aging treatment: The green body after sintering treatment in step (5) was subjected to a primary aging treatment at 900 °C for 4 h and to a secondary aging treatment at 530 °C for 3 h, and a blank of the sintered Nd-Fe-B permanent magnet was prepared by the dual alloy method.
   (7) The blank described above was processed into flakes with dimensions of 25 mm × 20 mm × 2.5 mm, wherein 2.5 mm was the thickness in the orientation direction of the flakes.
   (8) The neodymium-iron-boron flakes obtained in step (7) were subjected to acid cleaning in a nitric acid solution with a volume concentration of 3%, ultrasonically washed in water, and dried to obtain cleaned flakes.
II. Diffusion treatment
   (1) Preparation of diffusion slurry: elemental Dy, elemental Pr, 4-hexylresorcinol, and ethanol were mixed according to a mass ratio of 8:3:3:1, and the mixture was mechanically stirred for 2 h to obtain a diffusion slurry containing Dy and Pr.
   (2) The diffusion slurry described above was uniformly applied to the surface of the flakes obtained in step (8) at an application amount was 0.75 % of the substrate magnet by weight, and dried at 60 °C for 5 min to obtain flakes coated with Dy and Pr metal diffusion source.
   (3) The flakes coated in step (2) were subjected to vacuum permeation at 870 °C for 10 h.
   (4) The flakes after diffusion obtained in step (3) were subjected to vacuum aging treatment at 510 °C for 4.5 h to obtain a sintered neodymium-iron-boron permanent magnet M1 after composite Dy and Pr diffusion treatment.

### Comparative Example 1-1

The preparation method of the sintered neodymium-iron-boron permanent magnet in this comparative example is substantially the same as that of Example 1, except that the diffusion source of this comparative example was only elemental Dy powder without additional metal elements; the diffusion source was mixed according to a mass ratio of Dy powder, 4-hexylresorcinol, and ethanol of 11:3:1; the application amount was 0.55% of the substrate magnet by weight (ensuring that the content of Dy in the diffusion source was consistent); the sintered neodymium-iron-boron permanent magnet in this comparative example was designated as M1-1.

### Comparative Example 1-2

The preparation method of the sintered neodymium-iron-boron permanent magnet in this comparative example is substantially the same as that of Example 1, except that the diffusion source of this comparative example was light rare earth metal Pr powder without additional metal elements; the diffusion source was mixed according to a mass ratio of Pr powder, 4-hexylresorcinol, and ethanol of 11:3:1; the application amount was 0.55% of the substrate magnet by weight; the sintered neodymium-iron-boron permanent magnet in this comparative example was designated as M1-2.

### Example 2

This example is substantially the same as Example 1, except for the following:
A. Preparation of blank: Only the master alloy flakes were subjected to hydrogen decrepitation and coarse crushing of medium grinding alone, and then subjected to jet milling to obtain the magnetic powder of the master alloy, the magnetic powder was compressed to obtain a green body of the master alloy, and the green body was sintered to obtain a blank of the master alloy.
B. Flakes prepared from the blank of the master alloy described above were subjected to diffusion treatment in the same manner as in Example 1 to obtain a sintered neodymium-iron-boron permanent magnet M2.

### Comparative Example 2-1

The preparation method of the sintered neodymium-iron-boron permanent magnet in this comparative example is substantially the same as that of Example 2, except that the diffusion source of this comparative example was only elemental Dy powder without additional metal elements; the diffusion source was mixed according to a mass ratio of Dy powder, 4-hexylresorcinol, and ethanol of 11:3:1; the application amount was 0.55% of the substrate magnet by weight; the sintered neodymium-iron-boron permanent magnet in this comparative example was designated as M2-1.

### Comparative Example 2-2

The preparation method of the sintered neodymium-iron-boron permanent magnet in this comparative example is substantially the same as that of Example 1, except that the diffusion source of this comparative example was light rare earth metal Pr powder without additional metal elements; the diffusion source was mixed according to a mass ratio of Pr powder, 4-hexylresorcinol, and ethanol of 11:3:1; the application amount was 0.55% of the substrate magnet by weight; the sintered neodymium-iron-boron permanent magnet in this comparative example was designated as M2-2.

### Example 3

This example is substantially the same as Example 1, except for the following:
A. preparation of blank: Only the auxiliary alloy flakes were subjected to hydrogen decrepitation and coarse crushing of medium grinding alone, and then subjected to jet milling to obtain the magnetic powder of the auxiliary alloy, the magnetic powder was compressed to obtain a green body of the auxiliary alloy, and the green body was sintered to obtain a blank of the auxiliary alloy.
B. Flakes prepared from the blank of the auxiliary alloy described above were subjected to diffusion treatment in the same manner as in Example 1 to obtain a sintered neodymium-iron-boron permanent magnet M3.

### Comparative Example 3-1

The preparation method of the sintered neodymium-iron-boron permanent magnet in this comparative example is substantially the same as that of Example 3, except that the diffusion source of this comparative example was only elemental Dy powder without additional metal elements; the diffusion source was mixed according to a mass ratio of Dy powder, 4-hexylresorcinol, and ethanol of 11:3:1; the application amount was 0.55% of the substrate magnet by weight; the sintered neodymium-iron-boron permanent magnet in this comparative example was designated as M3-1.

### Comparative Example 3-2

The preparation method of the sintered neodymium-iron-boron permanent magnet in this comparative example is substantially the same as that of Example 3, except that the diffusion source of this comparative example was light rare earth metal Pr powder without additional metal elements; the diffusion source was mixed according to a mass ratio of Pr powder, 4-hexylresorcinol, and ethanol of 11:3:1; the application amount was 0.55% of the substrate magnet by weight; the sintered neodymium-iron-boron permanent magnet in this comparative examplewas designated as M3-2.

### Comparative Example 4

The preparation method of the sintered neodymium-iron-boron permanent magnet in this comparative example is substantially the same as that of Example 1, except that in the sintering the temperature of high-temperature sintering was 1060 °C, the time was 5 h, and the ramping rate was 8 °C/min.

Performance test: dual-alloy neodymium-iron-boron magnets M1, M1-1 and M1-2, master alloy neodymium-iron-boron magnets M2, M2-1 and M-2, and auxiliary alloy neodymium-iron-boron magnets M3, M3-1 and M3-2 were processed into sample flakes with dimensions of 7 mm-7 mm-2.4 mm from the geometric center of the sintered neodymium-iron-boron permanent magnet, and subjected to the magnetic performance test. The results are summarized in Table 1.

**Table 1. Summary of magnetic performance of permanent magnets of examples and comparative examples**

| Blank | Raw material of blank | Magnetic performance of blank | | Diffusion source | Permanent magnet after diffusion | | ΔBr | ΔHcj |
|---|---|---|---|---|---|---|---|---|
| | | Br₀ (T) | Hcj₀ (KA/m) | | Br T | Hcj KA/m | | |
| Example 1 | Dual alloy | 1.381 | 1497 | Dy and Pr | 1.365 | 1871 | -0.016 | 374 |
| Comparative Example 1-1 | | | | Dy | 1.356 | 1626 | -0.025 | 129 |
| Comparative Example 1-2 | | | | Pr | 1.353 | 1520 | -0.028 | 23 |
| Example 2 | Master alloy | 1.395 | 1087 | Dy and Pr | 1.376 | 1442 | -0.019 | 355 |
| Comparative Example 2-1 | | | | Dy | 1.373 | 1393 | -0.022 | 306 |
| Comparative Example 2-1 | | | | Pr | 1.371 | 1159 | -0.024 | 72 |
| Example 3 | Auxiliary alloy | 1.324 | 1410 | Dy and Pr | 1.304 | 1762 | -0.020 | 352 |
| Comparative Example 3-1 | | | | Dy | 1.300 | 1740 | -0.024 | 330 |
| Comparative Example 3-2 | | | | Pr | 1.298 | 1496 | -0.026 | 86 |
| Comparative Example 4 | Dual alloy | 1.375 | 1480 | Dy and Pr | 1.355 | 1788 | -0.020 | 302 |

| | | | | | | | | |
|---|---|---|---|---|---|---|---|---|
| Note: ΔBr = Br - Br₀; ΔHcj = Hcj - Hcj₀. | | | | | | | | |

It can be seen from Table 1 that the coercivities of dual-alloy substrate magnets were significantly higher than those of main-alloy and auxiliary-alloy substrate magnets. When Dy metal powder was used as the diffusion source, the coercivity of the dual-alloy substrate after diffusion was 1626 KA/m, with an increase of 129 KA/m, which was less than the increases of 306 KA/m and 330 KA/m for the two single-alloy substrates after diffusion, while the increases of two single-alloy substrates were equivalent; and the same phenomenon occurred when Pr metal powder was used as the diffusion source. When the mixed metal powder of Dy and Pr was used as the diffusion source, the coercivity of the dual-alloy substrate after diffusion reached 1871 KA/m, which was significantly higher than the coercivities of 1442 KA/m and 1762 KA/m of the two single-alloy substrates after diffusion. The analysis of the results above shows that the low coercivity increase of the dual-alloy substrate was significantly improved when the Dy/Pr mixture was used as the diffusion source.

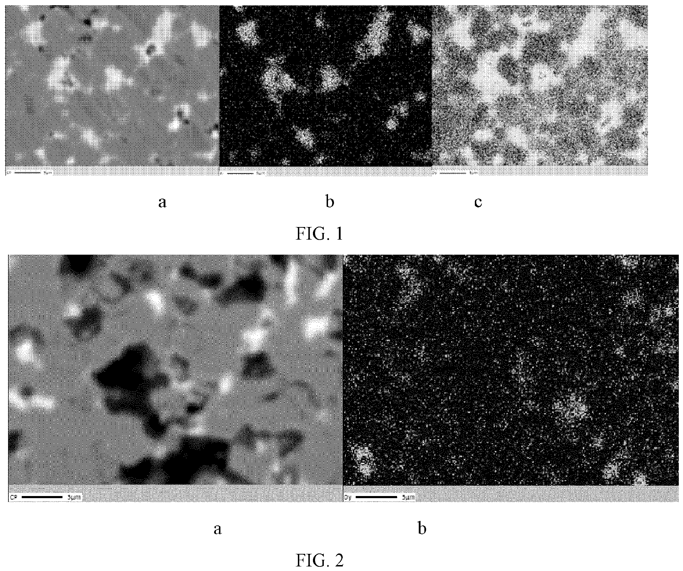

Samples in Example 1 and Comparative Example 1-1 were analyzed on an electron probe microanalyzer (EPMA) for the metal elements Pr and Dy in a micro area in the sintered neodymium-iron-boron permanent magnet (100 µm from the surface of the sintered neodymium-iron-boron permanent magnet) after diffusion, as shown in FIGs. 1 and 2. FIG. 2 illustrates the Dy-diffused dual-alloy substrate according to Comparative Example 1-1, and different colored regions in FIG. 2 represent the distribution of Dy content. It can be vaguely observed that a small amount of Dy was enriched at the grain boundary, indicating that a very small amount of Dy enters the sintered neodymium-iron-boron permanent magnet (as shown by the bright dots in panel b of FIG. 2). FIG. 1 illustrates the composite diffusion of the dual-alloy substrate according to Example 1 with the diffusion source being the mixed metal powder of Pr and Dy. It can be clearly observed that Pr and Dy are massively enriched at the grain boundary phase (as shown in panels b and c of FIG. 1). Therefore, it is indicated that Pr and Dy can effectively permeate into the sintered neodymium-iron-boron permanent magnet and can be uniformly distributed when the mixed metal powder of Pr and Dy is used as the diffusion source.

The distributions of Dy in the grain boundary phase in Examples 1 to 4 and Comparative Example 1-1 are shown in Table 2.

**Table 2. Distribution of Dy in the grain boundary phase**

| | Proportion of area with Dy content > 6 wt% in the grain boundary phase | Proportion of area with Dy content > 13 wt% in the grain boundary phase |
|---|---|---|
| Example 1 | 81% | 12% |
| Comparative Example 1-1 | 7% | 0.5% |
| Example 2 | 70% | 10% |
| Example 3 | 73% | 10% |
| Comparative Example 4 | 62% | 6.5% |

| | | |
|---|---|---|
| Note: Dy > 6 wt% refers to a Dy content in the grain boundary phase greater than 6 wt%; Dy > 13 wt% refers to a Dy content in the grain boundary phase greater than 13 wt%. | | |

As can be seen from FIG. 1, the addition of Pr to the diffusion source further facilitates the diffusion of Dy into the sintered neodymium-iron-boron permanent magnet. Since Dy atoms diffused into the sintered neodymium-iron-boron permanent magnet form more (Nd,Dy)₂Fe₁₄B phases in the grain boundary phase of the main phase Nd₂Fe₁₄B, the coercivity of the permanent magnet is improved. Meanwhile, since the Nd atoms in the main phase replaced by Dy enter the grain boundary phase of the sintered neodymium-iron-boron permanent magnet, the grain boundary phase becomes thicker, more uniform, and more continuous, weakening the exchange coupling effect of R₂Fe₁₄B main phase grains and thus improving the coercivity of the sintered neodymium-iron-boron permanent magnet.

It can be seen from Examples 2 and 3 that, although the coercivity of the sintered neodymium-iron-boron permanent magnet did not increase as much as that of Example 1 when blanks were prepared by the master alloy powder or the auxiliary alloy powder using the mixed metal powder of Pr and Dy as the diffusion source, the coercivity of the sintered neodymium-iron-boron permanent magnet also increased and the decrease of Br was also relatively mild, compared with the blanks before diffusion.

Although Hcj of the sintered neodymium-iron-boron permanent magnet increased more significantly when Dy was used as the diffusion source in Comparative Examples 2-1 and 3-1, Br values of the sintered neodymium-iron-boron permanent magnet were greatly decreased, which is very disadvantageous for the use of the permanent magnet in a motor.

It can be seen from Example 1 and Comparative Example 4 that the products of Example 1 and Comparative Example 4 are significantly different, and the coercivity values of Comparative Example 4 are significantly lower than that of Example 1, although the two alloys were used as the substrate and Pr and Dy were both used as the diffusion source. This is attributed to the absence of the special sintering process and the multi-stage, variable-rate temperature ramping during the sintering and the insufficient removal of hydrogen, nitrogen and antioxidants in the blank in Comparative Example 4, which are particularly important in the preparation process of the dual-alloy substrate and directly result in poor effect of subsequent diffusion treatment.

The exemplary embodiments of the present disclosure have been described above. However, the protection scope of the present application is not limited to the above embodiments. Any modification, equivalent, improvement and the like made by those skilled in the art without departing from the spirit and principle of the present disclosure shall fall within the protection scope of the present disclosure.

## Claims

1. A sintered neodymium-iron-boron permanent magnet, comprising a grain and a grain boundary phase, wherein the grain boundary phase is located on an epitaxial layer of the grain, and the grain boundary phase comprises at least an RH;
the grain comprises at least Nd₂Fe₁₄B;
in the grain boundary phase within a depth of 100µm from the surface to the center of the sintered neodymium-iron-boron permanent magnet, the area of the grain boundary phase with an RH content of more than 6 wt% accounts for 50% or more of the total area of the grain boundary phase.

2. The sintered neodymium-iron-boron permanent magnet according to claim 1, wherein in the grain boundary phase within a depth of 100µm from the surface to the center of the sintered neodymium-iron-boron permanent magnet, the area of the grain boundary phase with an RH content of more than 6 wt% accounts for 70% or more of the total area of the grain boundary phase;
and/or, in the grain boundary phase, the area of the grain boundary phase with an RH content of more than 13 wt% accounts for 1% or more of the total area of the grain boundary phase;
and/or, the grain boundary phase comprises an RH and/or an RL; the RL represents a light rare earth element selected from at least one of Pr, Nd, La, and Ce; the RH represents a heavy rare earth element selected from at least one of Dy, Tb, and Ho;
and/or, the sintered neodymium-iron-boron permanent magnet is obtained by milling, compressing and sintering a raw material of the sintered neodymium-iron-boron permanent magnet to obtain a blank, arranging a diffusion source on the surface of the blank, and conducting diffusion treatment; the raw material of the sintered neodymium-iron-boron permanent magnet comprises a master alloy and/or an auxiliary alloy.

3. The sintered neodymium-iron-boron permanent magnet according to claim 2, wherein the master alloy comprises at least one of: R₁, Fe, B, and M₁; R₁ is selected from at least one of Pr, Nd, Ce, La, Dy, and Tb, and the content of R₁ is not less than 29 wt% and not more than 32.2 wt%; the content of B is more than 0.8 wt% and not more than 0.94 wt%; M₁ is selected from Ga and Cu, and optionally comprises or does not comprise at least one of Al, Zr, Ti, and Co, the content of M being more than 0 and not more than 2.5 wt%, Ga accounting for 0-0.5 wt% of the total amount of M, Cu accounting for 0-0.4 wt% of the total amount of M;
and/or, the auxiliary alloy comprises at least one of: R₂, Fe, B, and M₂; R₂ is selected from at least one of Pr, Nd, Dy, and Tb, and the content of R₂ is not less than 30 wt% and not more than 33.3 wt%; the content of B is more than 0.94 wt% and not more than 1.1 wt%; M₂ is selected from Ga and Cu, and optionally comprises or does not comprise at least one of Al, Zr, Ti, and Co, the content of M being more than 0 and not more than 3 wt%, Ga accounting for 0-0.5 wt% of the total amount of M, Cu accounting for 0-0.4 wt% of the total amount of M;
and/or, the content of B in the master alloy is less than the content of B in the auxiliary alloy.

4. The sintered neodymium-iron-boron permanent magnet according to claim 2, wherein the sintering comprises: sintering by a multi-stage heating with variable-rate thermal ramping in vacuum;
and/or, the diffusion source comprises the RH and the RL; in the diffusion source, the mass ratio of the RL to the RH is more than 0 and not more than 0.5.

5. The sintered neodymium-iron-boron permanent magnet according to claim 4, wherein the multi-stage heating with variable-rate thermal ramping comprises: heating to 300-400 °C at a ramping rate of 1-3 °C/min, heating to 700-800 °C at a ramping rate of 4-6 °C/min, holding at 700-800 °C for a period of time, and heating to 1000-1100 °C at a ramping rate of 7-10 °C/min.

6. A preparation method of the sintered neodymium-iron-boron permanent magnet according to any one of claims 1 to 5, comprising:
(1) a milling process: mixing and crushing a raw material of the sintered neodymium-iron-boron permanent magnet to obtain a magnetic powder, the raw materials of the sintered neodymium-iron-boron permanent magnet comprising a master alloy and/or an auxiliary alloy;
(2) a compressing process: compressing and forming the magnetic powder under the action of a magnetic field to obtain a green body;
(3) a sintering process: sintering the green body to obtain a blank; and
(4) a diffusion treatment: dispersing a diffusion material on the surface of the blank obtained in step (3), and conducting a permeation treatment to obtain the sintered neodymium-iron-boron permanent magnet, the diffusion material comprising a powder of the RH and a powder of the RL.

7. The method according to claim 6, wherein, the raw material of the sintered neodymium-iron-boron permanent magnet comprises the master alloy and the auxiliary alloy, the mass ratio of the master alloy to the auxiliary alloy being (1-5): 1; and/or, in step (3), the sintering comprises: sintering by a multi-stage heating with variable-rate thermal ramping to 1000-1100 °C in vacuum to obtain the blank; during the sintering, the degree of vacuum is 10⁻¹ Pa or less; and the time of the sintering is 1-10 h.

8. The method according to claim 7, wherein the multi-stage heating with variable-rate thermal ramping comprises: heating to 300-400 °C at a ramping rate of 1-3 °C/min, heating to 700-800 °C at a ramping rate of 4-6 °C/min, holding at 700-800 °C for a period of time, and heating to 1000-1100 °C at a ramping rate of 7-10 °C/min.

9. The method according to claim 6, wherein the mass ratio of the powder of the RL to the powder of the RH is more than 0 and not more than 0.5;
and/or, in step (4), the permeation treatment comprises: heating to 830-910 °C in vacuum for permeation for 6-12 h.

10. Use of the sintered neodymium-iron-boron permanent magnet according to any one of claims 1 to 5 in a motor.
